# EUROPÄISCHE PATENTANMELDUNG

(11) **EP 1 854 580 A2**
(43) Veröffentlichungstag der Anmeldung: **14.11.2007**
(21) Anmeldenummer: 07008831.5
(22) Anmeldetag: 02.05.2007
(51) Int. Cl.: B23Q 5/00

(54) **Werkzeugmaschine**

(30) Priorität: 10.05.2006 DE 102006023030
(71) Anmelder: Traub Drehmaschinen GmbH & Co. KG, 73262 Reichenbach (DE)
(72) Erfinder: Herrmann, Albrecht, 73614 Schorndorf (DE)
(74) Vertreter: Hoeger, Stellrecht & Partner Patentanwälte

(57) **Zusammenfassung**

Um eine Werkzeugmaschine umfassend eine Werkstückaufnahme, mit welcher ein in dieser aufgenommenes Werkstück um eine Werkstückachse drehbar ist, einen Werkzeugträger mit einer Werkzeughalteraufnahme, einen ein Werkzeug tragenden Werkzeughalter mit einem Werkzeughalterkörper und einem Verbindungskörper, der formschlüssig mit der Werkzeughalteraufnahme verbindbar ist, und mindestens zwei gesteuerte Bearbeitungsachsen, mit welchen die Werkstückaufnahme und der Werkzeugträger relativ zueinander bewegbar sind, derart zu verbessern, dass auch für verschiedene Bearbeitungsrichtungen von der Grundkonzeption her weitgehend identische Werkzeughalter einsetzbar sind, wird vorgeschlagen, dass die Werkzeughalteraufnahme und der Werkzeughalterkörper in mindestens zwei bezüglich einer geometrischen Achse gegeneinander verdrehten Drehstellungen zueinander ausrichtbar sind, dass in einer Arbeitsstellung des Werkzeughalters die geometrische Achse in einem Winkel von ungefähr 45° gegenüber der Werkstückdrehachse geneigt ausgerichtet ist und dass eine Werkzeugachse einen Winkel von ungefähr 45° mit der geometrischen Achse einschließt.

## Beschreibung

Die Erfindung betrifft eine Werkzeugmaschine, umfassend eine Werkstückaufnahme, mit welcher ein in dieser aufgenommenes Werkstück um eine Werkstückachse drehbar ist, einen Werkzeugträger mit einer Werkzeughalteraufnahme, einen ein Werkzeug tragenden Werkzeughalter mit einem Verbindungskörper, der formschlüssig mit der Werkzeughalteraufnahme verbindbar ist, und mindestens zwei gesteuerte Bearbeitungsachsen, mit welchen die Werkstückaufnahme und der Werkzeugträger relativ zueinander bewegbar sind.

Eine derartige Werkzeugmaschine ist aus dem Stand der Technik bekannt. Bei dieser besteht das Problem, das bei Einsatz von Werkzeugen in unterschiedlichen Bearbeitungsrichtungen, beispielsweise in einer parallel zur Drehachse des Werkstücks verlaufenden Bearbeitungsrichtung und einer quer zur Drehachse des Werkstücks verlaufenden Bearbeitungsrichtung, unterschiedliche Werkzeughalter und unterschiedliche Werkzeuge erforderlich sind.

Der Erfindung liegt daher die Aufgabe zugrunde, eine Werkzeugmaschine der gattungsgemäßen Art derart zu verbessern, dass auch für verschiedene Bearbeitungsrichtungen von der Grundkonzeption her weitgehend identische Werkzeughalter einsetzbar sind.

Diese Aufgabe wird bei einer Werkzeugmaschine der eingangs beschriebenen Art erfindungsgemäß dadurch gelöst, dass die Werkzeughalteraufnahme und der Werkzeughalterkörper in mindestens zwei bezüglich einer geometrischen Achse gegeneinander verdrehten Drehstellungen zueinander ausrichtbar sind, dass in einer Arbeitsstellung des Werkzeughalters die geometrische Achse in einem Winkel von ungefähr 45° gegenüber der Werkstückdrehachse geneigt ausgerichtet ist und dass eine Werkzeugachse einen Winkel von ungefähr 45° mit der geometrischen Achse einschließt.

Der Vorteil der erfindungsgemäßen Lösung ist darin zu sehen, dass durch die verschiedenen Drehstellungen des Werkzeughalterkörpers die Möglichkeit besteht, das Werkzeug in unterschiedlicher Ausrichtung zum Werkzeugträger zu positionieren und somit auch in unterschiedlichen durch die Werkzeugachse vorgegebenen Bearbeitungsrichtungen einsetzen zu können, ohne dass hierzu ein anders aufgebauter Werkzeughalter erforderlich ist.

Als besonders vorteilhaft hat es sich erwiesen, wenn der Werkzeughalterkörper relativ zur Werkzeughalteraufnahme in mindestens zwei um 180° relativ zueinander gedrehten Drehstellungen positionierbar ist, so dass dadurch in einfacher Weise ein Wechsel der Bearbeitungsrichtung zwischen einer parallel zur Spindelachse liegenden Bearbeitungsrichtung und einer quer, insbesondere senkrecht zur Spindelachse liegenden Bearbeitungsrichtung möglich ist.

Dies schließt jedoch nicht aus, dass der Werkzeughalterkörper relativ zur Werkzeughalteraufnahme entsprechend zusätzlichen Anforderungen an die Bearbeitung in weitere Zwischenstellungen drehbar ist, in welchen für besondere geometrische Formen des Werkstücks Bearbeitungen durchführbar sind, wie zum Beispiel schräg ausgerichtete Bohrungen.

Insbesondere sind derartige weitere Drehstellungen für Werkzeughalter mit angetriebenen Werkzeugen vorgesehen.

Prinzipiell wäre es bei der erfindungsgemäßen Lösung denkbar, den Werkzeughalterkörper relativ zum Verbindungskörper drehbar zu gestalten, so dass der Verbindungskörper stets mit der gleichen Ausrichtung in die Werkzeughalteraufnahme einsetzbar ist.

Diese Lösung hat jedoch eine hohe Komplexität hinsichtlich der drehbaren Verbindung des Werkzeughalterkörpers mit dem Verbindungskörper und außerdem eine geringere geometrische Genauigkeit zur Folge.

Aus diesem Grund sieht eine vorteilhafte Ausführungsform vor, dass der Verbindungskörper in mindestens zwei gegeneinander verdrehten Drehstellungen in die Werkzeughalteraufnahme einsetzbar ist.

Damit besteht zumindest die Möglichkeit, die zwei Drehstellungen einfach durch Drehen des gesamten Werkzeughalters mitsamt dem Verbindungskörper zu realisieren.

Besonders vorteilhaft ist es dabei, wenn alle Drehstellungen des Werkzeughalterkörpers relativ zur Werkzeughalteraufnahme durch ein entsprechend verdrehtes Einsetzen des Verbindungskörpers in die Werkzeughalteraufnahme realisierbar sind, so dass der Verbindungskörper starr mit dem Werkzeughalterkörper verbunden sein kann.

Hinsichtlich einer stabilen Fixierung des Werkzeughalters relativ zum Werkzeugträger hat es sich als vorteilhaft erwiesen, wenn der Werkzeugträger eine Stützfläche aufweist, auf welcher der Werkzeughalter mit einer Anlagefläche abstützbar ist.

Die Stützfläche könnte dabei völlig unabhängig von der Werkzeughalteraufnahme vorgesehen sein. Eine besonders günstige Lösung sieht jedoch vor, dass jeder Werkzeughalteraufnahme eine Stützfläche zugeordnet ist.

Vorzugsweise ist dabei die Stützfläche so ausgebildet, dass sie senkrecht zur geometrischen Achse verläuft.

Eine besonders vorteilhafte Abstützung des Werkzeughalters an dem Werkzeugträger ist dann möglich, wenn die Stützfläche zumindest bereichsweise um die Werkzeughalteraufnahme herum verläuft.

Eine besonders zweckmäßige Realisierung sieht vor, dass die Stützfläche die Werkzeughalteraufnahme umschließt, insbesondere im Wesentlichen vollständig umschließt.

Darüber hinaus ist es günstig, wenn die Stützfläche symmetrisch zur geometrischen Achse ausgebildet ist, wobei diese Symmetrie eine mehrzählige Symmetrie bezüglich der geometrischen Achse sein kann.

Hinsichtlich der weiteren Ausbildung der Stützfläche ist es günstig, wenn diese eine stellungsunabhängige Stützfläche ist, das heißt in jeder Drehstellung des Werkzeughalterkörpers relativ zur Werkzeughalteraufnahme den Werkzeughalter abstützt.

Insbesondere ist bei mehreren Werkzeughalteraufnahmen jeder der Werkzeughalteraufnahmen eine stellungsunabhängige Stützfläche zugeordnet.

Um eine weitere verbesserte Abstützung des Werkzeughalters zumindest in ausgewählten Drehstellungen zu erhalten, ist vorgesehen, dass der Werkzeughalteraufnahme mindestens eine stellungsabhängige Stützfläche zugeordnet ist, welche somit den Werkzeughalter in einer bestimmten Drehstellung abstützt.

Insbesondere ist bei mehreren Werkzeughalteraufnahmen jeder der Werkzeughalteraufnahmen eine stellungsabhängige Stützfläche zugeordnet.

Diese stellungsabhängige Stützfläche kann in unterschiedlichster Art und Weise relativ zur stellungsunabhängigen Stützfläche angeordnet sein.

Eine besonders günstige Lösung sieht vor, dass die stellungsabhängige Stützfläche relativ zur stellungsunabhängigen Stützfläche in einem spitzen Winkel verläuft.

Vorzugsweise beträgt dieser spitze Winkel mindestens ungefähr 20°.

Besonders günstig ist es, wenn der spitze Winkel zwischen ungefähr 30° und ungefähr 60°liegt.

Eine besonders günstige Lösung sieht vor, dass der spitze Winkel ungefähr 45° beträgt.

Ferner ist vorzugsweise vorgesehen, dass die stellungsabhängige Stützfläche im Anschluss an die stellungsunabhängige Stützfläche angeordnet ist, so dass die beiden Stützflächen jeweils unmittelbar nebeneinander liegen.

Dabei sind zweckmäßigerweise die stellungsabhängigen Stützflächen auf mehreren Seiten der stellungsunabhängigen Stützfläche angeordnet, um eine möglichst räumlich konzentrierte Verteilung der Stützflächen zu erhalten.

Um für mehrere Drehstellungen stellungsabhängige Stützflächen zur Verfügung stellen zu können, sind vorzugsweise mehrere stellungsabhängige Stützflächen vorgesehen und beispielsweise jeder Werkzeughalteraufnahme zugeordnet.

Hinsichtlich der Ausbildung des Verbindungskörpers wurden bislang keine näheren Angaben gemacht. So sieht ein vorteilhaftes Ausführungsbeispiel vor, dass über den Verbindungskörper ein Antrieb des Werkzeugs erfolgt, so dass in einfacher Weise angetriebene Werkzeuge eingesetzt werden können.

Vorzugsweise ist dabei vorgesehen, dass in den Werkzeughalter eine Werkzeugspindel für ein angetriebenes Werkzeug integriert ist.

Zweckmäßigerweise ist dabei die Werkzeugspindel durch eine in dem Verbindungskörper vorgesehene Antriebswelle antreibbar.

Die Antriebswelle kann dabei in unterschiedlichster Art und Weise relativ zum Verbindungskörper angeordnet sein. Eine vorteilhafte Lösung sieht vor, dass die Antriebswelle koaxial zur geometrischen Achse angeordnet ist.

Ferner ist die Antriebswelle, um ihrerseits angetrieben zu werden, so ausgebildet, dass sie ein Kupplungselement trägt, mittels welchem die Antriebswelle selbst antreibbar ist.

Zweckmäßigerweise ist dabei das Kupplungselement endseitig an einem in die Werkzeughalteraufnahme einführbaren vorderen Ende des Verbindungskörpers angeordnet.

Hinsichtlich des Antriebs der Antriebswelle wurden bislang keine näheren Angaben gemacht. So sieht ein vorteilhaftes Ausführungsbeispiel vor, dass das Kupplungselement mit einer Werkzeugantriebseinheit kuppelbar ist.

Eine derartige Werkzeugantriebseinheit könnte jeder Werkzeughalteraufnahme zugeordnet sein.

Da jedoch lediglich der in Arbeitsstellung stehende Werkzeughalter angetrieben werden muss, ist zweckmäßigerweise vorgesehen, dass die Werkzeugantriebseinheit mit dem Kupplungselement des in einer Arbeitsstellung stehenden Werkzeugalters verbindbar ist, so dass lediglich der in der Arbeitsstellung stehende Werkzeughalter einen Antrieb erfährt.

Vorzugsweise ist dabei vorgesehen, dass die Werkzeugantriebseinheit stationär angeordnet ist und jeweils dann, wenn der entsprechende Werkzeughalter in der Arbeitsstellung steht, eine Verbindung mit dessen Kupplungselement erfolgt.

Hinsichtlich der Ausbildung der Werkzeughalteraufnahme selbst wurden im Zusammenhang mit der bisherigen Erläuterung keine weiteren Angaben gemacht.

So ist es grundsätzlich denkbar, die Werkzeughalteraufnahme entsprechend den bekannten DIN-Aufnahmen auszubilden, beispielsweise in Anlehnung an die Werkzeugaufnahme nach DIN 69880.

Eine vorteilhafte Lösung sieht dabei vor, dass die Werkzeughalteraufnahme eine in den Werkzeugträger eindringende Bohrung ist, deren Mittelachse die geometrische Achse darstellt.

In diesem Fall ist zweckmäßigerweise vorgesehen, dass die Bohrung im Wesentlichen als Zylinderbohrung ausgeführt ist, die jedoch keinen kreiszylindrischen Querschnitt, sondern einen hiervon abweichenden, ungefähr eiförmigen Querschnitt aufweist.

Vorzugsweise ist in diesem Fall der Verbindungskörper ein in die Bohrung einsetzbarer Schaft.

Ein derartiger Schaft ließe sich beispielsweise in der Werkzeughalteraufnahme durch eine Klemmung fixieren.

Eine besonders zweckmäßige Lösung sieht vor, dass der Schaft mindestens eine Verzahnung aufweist, mit welcher der Schaft in der Werkzeughalteraufnahme fixierbar ist, insbesondere gegen eine Bewegung in Richtung der geometrischen Achse.

Eine besonders zweckmäßige Lösung, insbesondere dann, wenn der als Schaft ausgebildete Verbindungskörper in mehreren Drehstellungen in die Werkzeughalteraufnahme einsetzbar sein soll, sieht vor, dass der Schaft eine Ringverzahnung aufweist.

Eine Fixierung gegen eine Drehung erfolgt im Bereich des Schafts insbesondere kraftschlüssig, im Fall eines sogenannten Wasserzapfens auch noch formschlüssig.

Hinsichtlich der Kühlschmierstoffversorgung einer derartigen Werkzeugmaschine wurden bislang keine näheren Angaben gemacht. Prinzipiell könnte die Kühlschmierstoffversorgung mit separaten Rohren erfolgen.

Eine besonders zweckmäßige Lösung sieht vor, dass der Werkzeugträger eine Kühlschmierstoffversorgung für das Werkzeug aufweist, wobei die Kühlschmierstoffversorgung des Werkzeugs über den Werkzeughalter erfolgt.

Dabei ist es günstig, wenn die Kühlschmierstoffversorgung des Werkzeughalters über mindestens eine Mündungsöffnung in der Stützfläche erfolgt, so dass in einfacher Weise der Kühlschmierstoff von dem Werkzeugträger dem Werkzeughalter zugeführt werden kann.

Ferner ist zweckmäßiger Weise vorgesehen, dass die Kühlschmierstoffversorgung über im Werkzeugträger und im Werkzeughalterköper vorgesehene Kanäle erfolgt, so dass keine separaten Leitungen hierzu erforderlich sind.

Ferner ist zweckmäßigerweise vorgesehen, dass die Kühlschmierstoffversorgung des Werkzeugs über einen in der Werkzeugspindel verlaufenden Kanal, insbesondere direkt in das Werkzeug hinein als sogenannte innere Kühlmittelzuführung, erfolgt.

Im Zusammenhang mit der bisherigen Erläuterung der erfindungsgemäßen Lösungen wurden keine näheren Aussagen über die Ausbildung des Werkzeughalterkörpers gemacht. Dieser könnte prinzipiell beliebig ausgebildet sein.

Eine besonders zweckmäßige Lösung sieht vor, dass der Werkzeughalterkörper einen Anlagekörper und ein Spindelgehäuse umfasst.

Dabei ist es, um den Werkzeughalter an unterschiedliche Situationen anpassen zu können, besonders günstig, wenn der Anlagekörper und das Spindelgehäuse voneinander trennbar sind, so dass beispielsweise der Anlagekörper stets identisch ausgebildet sein kann und das Spindelgehäuse variieren kann oder umgekehrt.

Zweckmäßigerweise ist dabei der Anlagekörper mit dem Verbindungskörper fest verbunden, so dass Anlagekörper und Verbindungskörper eine Einheit darstellen, gegenüber welchen das eine zweite Einheit darstellende Spindelgehäuse mit der Werkzeugspindel auswechselbar ist.

Hinsichtlich des Werkzeugträgers wurden im Zusammenhang mit der bisherigen Erläuterung der einzelnen Ausführungsbeispiele ebenfalls keine näheren Angaben gemacht. Beispielsweise könnte der Werkzeugträger ein Linearwerkzeugträger sein.

Eine besonders günstige Lösung sieht vor, dass der Werkzeugträger ein Werkzeugrevolver mit einem Revolverträger und einem Revolverkopf ist, welcher die Werkzeughalteraufnahmen trägt.

Vorzugsweise ist ein derartiger Revolverkopf um eine Revolverachse drehbar und in diesem Fall ist die geometrische Achse in einem Winkel von ungefähr 45° gegenüber der Revolverachse geneigt angeordnet.

In einem derartigen Fall eines um eine Revolverachse drehbaren Revolverkopfes ist prinzipiell ein Antrieb für den Revolverkopf erforderlich.

Ein derartiger Antrieb des Revolverkopfes kann über eine separate Antriebseinrichtung erfolgen.

Eine besonders günstige Lösung sieht jedoch vor, dass der Revolverkopf mit der Werkzeugantriebseinheit um die Revolverachse drehbar ist.

Eine derartige Drehung des Revolverkopfes mittels der Werkzeugantriebseinheit kann prinzipiell gleichzeitig mit einem Antrieb des Werkzeugs erfolgen. In diesem Fall ist lediglich eine Kupplung zwischen der Werkzeugantriebseinheit und einem Antriebselement des Revolverkopfes vorzusehen.

Eine besonders zweckmäßige Lösung sieht jedoch vor, dass mit der Werkzeugantriebseinheit entweder der Revolverkopf oder der Werkzeughalter in der Arbeitsstellung antreibbar ist.

Vorzugsweise lässt sich dies dadurch realisieren, dass eine Drehübertragungswelle mit der Werkzeugantriebseinheit gekoppelt ist, mit welcher entweder der Werkzeughalter oder das Antriebselement des Revolverkopfes antreibbar ist.

Generell ist es durch Kupplungen möglich, zwischen einem Antrieb des Werkzeughalters oder einem Antrieb des Revolverkopfes umzuschalten.

Vorzugsweise ist dazu die Drehübertragungswelle in Richtung ihrer Achse zwischen einer Werkzeughalterantriebsstellung und einer Revolverantriebsstellung verschiebbar und je nach Stellung der Drehübertragungswelle erfolgt ein Antrieb des Werkzeughalters oder des Revolverkopfes.

Hinsichtlich der Werkstückaufnahme wurden ebenfalls keine weiteren Angaben gemacht. So sieht eine vorteilhafte Lösung vor, dass die Werkstückaufnahme eine Werkstückspindel ist.

In diesem Fall entspricht zweckmäßigerweise die Drehachse des Werkstücks der Spindelachse der Werkstückspindel.

Ferner ist vorzugsweise vorgesehen, dass der Werkzeugträger auf einem Werkzeugschlitten sitzt, welcher in der Lage ist, die Bewegungen in Richtung der beiden Bearbeitungsachsen zu realisieren.

Außerdem betrifft die Erfindung einen Werkzeughalter mit einem längs einer Werkzeugachse ausgerichteten Werkzeug, mit einem Werkzeughalterkörper und einem Verbindungskörper, der formschlüssig mit einer Werkzeughalteraufnahme verbindbar ist.

Bei diesem wird die eingangs genannte Aufgabe erfindungsgemäß dadurch gelöst, dass der Verbindungskörper längs einer geometrischen Achse in die Werkzeughalteraufnahme einsetzbar ist, die einen Winkel von ungefähr 45° mit der Werkzeugachse einschließt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: eine perspektivische Ansicht eines ersten Ausführungsbeispiels einer erfindungsgemäßen Werkzeugmaschine mit einem Werkzeug, dessen Bearbeitungsrichtung parallel zu einer Drehachse des Werkstücks ausgerichtet ist;
- Figur 2: eine Ansicht ähnlich Figur 1 mit einem Werkzeug, dessen Bearbeitungsrichtung senkrecht zur Spindelachse ausgerichtet ist;
- Figur 3: eine Draufsicht auf die Werkzeugmaschine gemäß Figur 1 mit Blickrichtung senkrecht zu einer X-Richtung und einer Z-Richtung;
- Figur 4: eine Draufsicht auf die Werkzeugmaschine gemäß Figur 2 mit Blickrichtung senkrecht zur X-Richtung und Z-Richtung;
- Figur 5: einen Schnitt durch einen vorderen Bereich eines Werkzeugträgers mit Werkzeugrevolver bei angetriebenem Werkzeughalter gemäß dem in den Figuren 1 bis 4 dargestellten ersten Ausführungsbeispiel;
- Figur 6: eine vergrößerte Darstellung des Schnitts gemäß Figur 5 im Bereich des Werkzeughalters und einer Werkzeughalteraufnahme bei angetriebenem Werkzeughalter;
- Figur 7: einen Schnitt ähnlich Figur 5 bei angetriebenem Revolver;
- Figur 8: einen Schnitt ähnlich Figur 6 durch ein zweites Ausführungsbeispiel einer erfindungsgemäßen Werkzeugmaschine und
- Figur 9: einen Schnitt ähnlich Figur 6 durch ein drittes Ausführungsbeispiel einer erfindungsgemäßen Werkzeugmaschine.

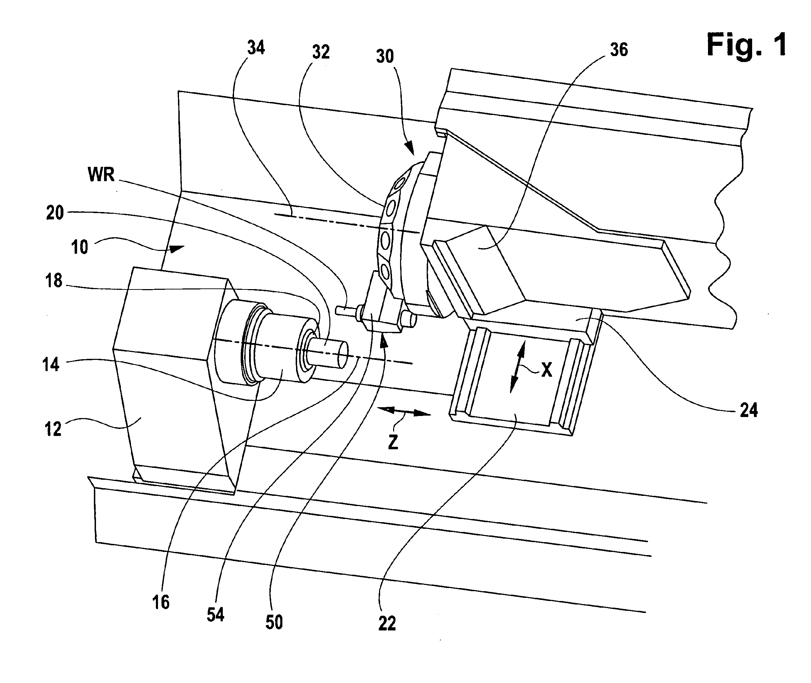

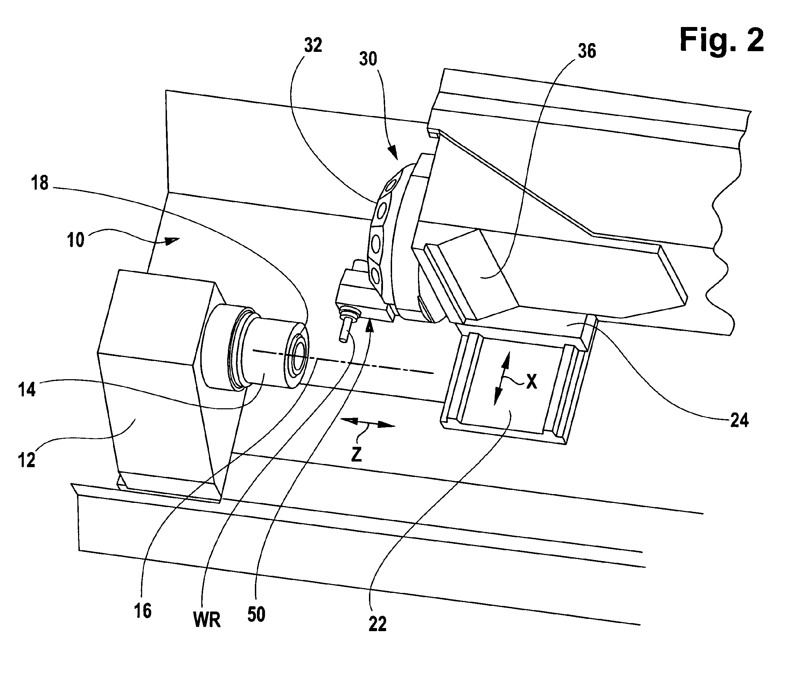

Ein in Figur 1 und 2 dargestelltes Ausführungsbeispiel einer erfindungsgemäßen Werkzeugmaschine umfasst ein als Ganzes mit 10 bezeichnetes Maschinengestell, auf welchem ein Spindelträger 12 angeordnet ist, in welchem eine Werkstückspindel 14 um eine Spindelachse 16 drehbar gelagert ist.

Die Werkstückspindel 14 ist dabei mit einer Aufnahme 18 für ein Werkstück 20 versehen.

An dem Maschinengestell 10 ist außerdem eine Schlittenführung 22 angeordnet, auf welcher mindestens ein X-Schlitten 24 quer zur Spindelachse 16, in einer sogenannten X-Richtung verfahrbar ist.

Darüber hinaus sind die Schlittenführung 22 und/oder der Spindelträger 12 in einer parallel zur Spindelachse 16 verlaufenden Z-Richtung verfahrbar.

Auf dem X-Schlitten 24 sitzt ein als Ganzes mit 30 bezeichneter Werkzeugrevolver, welcher einen Revolverkopf 32 umfasst, der um eine Revolverachse 34 drehbar an einer Trägereinheit 36 gehalten ist, deren Basis 38 auf dem X-Schlitten sitzt.

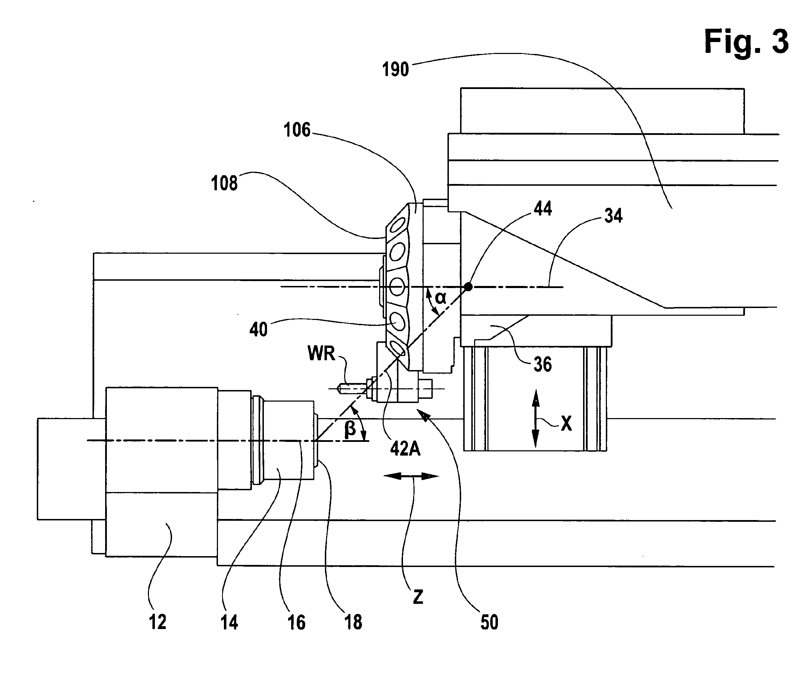

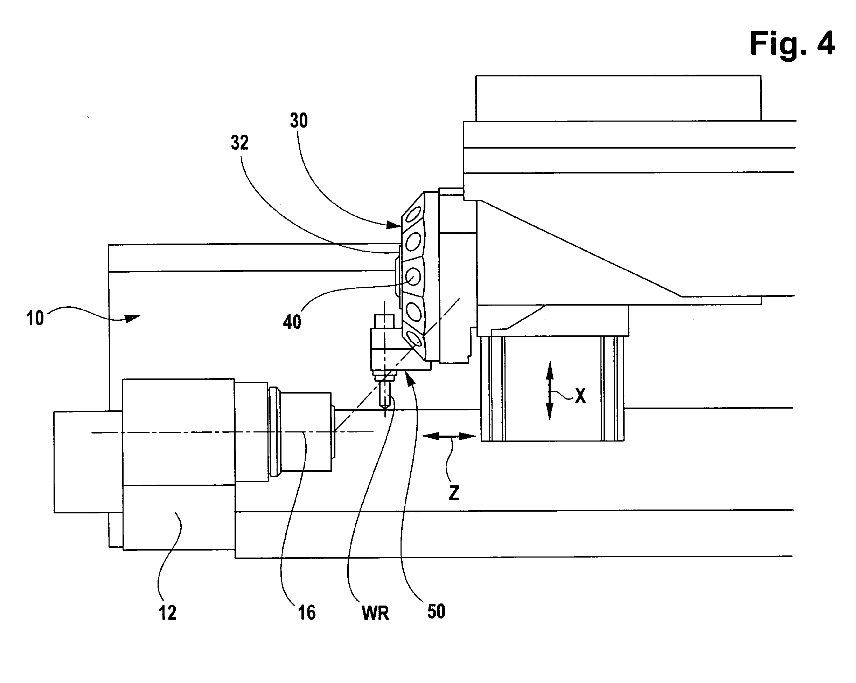

Der Revolverkopf 32 ist dabei, wie insbesondere in Figur 3 und Figur 4 dargestellt, mit einer Vielzahl von Werkzeughalteraufnahmen 40 versehen, welche so ausgebildet sind, dass in diese jeweils ein Verbindungskörper 52 eines als Ganzes mit 50 bezeichneten Werkzeughalters längs einer geometrischen Achse 42 einsetzbar ist, wobei sich der Verbindungskörper 52 insbesondere in Richtung der geometrischen Achse 42 erstreckt.

Bei jeder der Werkzeughalteraufnahmen 40 des Revolverkopfes 32 verläuft die geometrische Achse 42 so, dass diese die Revolverachse 34 in einem Punkt 44 schneidet, wobei ein Winkel α zwischen der geometrischen Achse 42 und der Revolverachse 34 ungefähr 45° beträgt.

Die Werkzeugaufnahmen 40 sind vorzugsweise im Revolverkopf 32 vorgesehene ungefähr zylindrische Bohrungen, deren Mittelachse die geometrische Achse 42 ist.

Ferner verläuft die geometrische Achse 42 A der in Arbeitsstellung stehenden Werkzeughalteraufnahme 40 A so, dass diese die Spindelachse 16 in einem Winkel β schneidet, welcher ebenfalls ungefähr 45° beträgt.

Der Werkzeughalter 50 umfasst neben dem Verbindungskörper 52 einen Werkzeughalterkörper 54, welcher mit einer Werkzeugaufnahme 56 versehen ist, in welche ein Werkzeug 58 einsetzbar ist, das sich längs einer Werkzeugachse 60 erstreckt.

Die Werkzeugachse 60 ist dabei dahingehend definiert, dass diese bei einem rotierend angetriebenen Werkzeug 58, beispielsweise einem Bohrer, die Drehachse ist und bei einem feststehenden Werkzeug 58 die Achse ist, gegenüber welcher die Schneidengeometrie bei einer Zustellbewegung längs dieser Achse definiert ist.

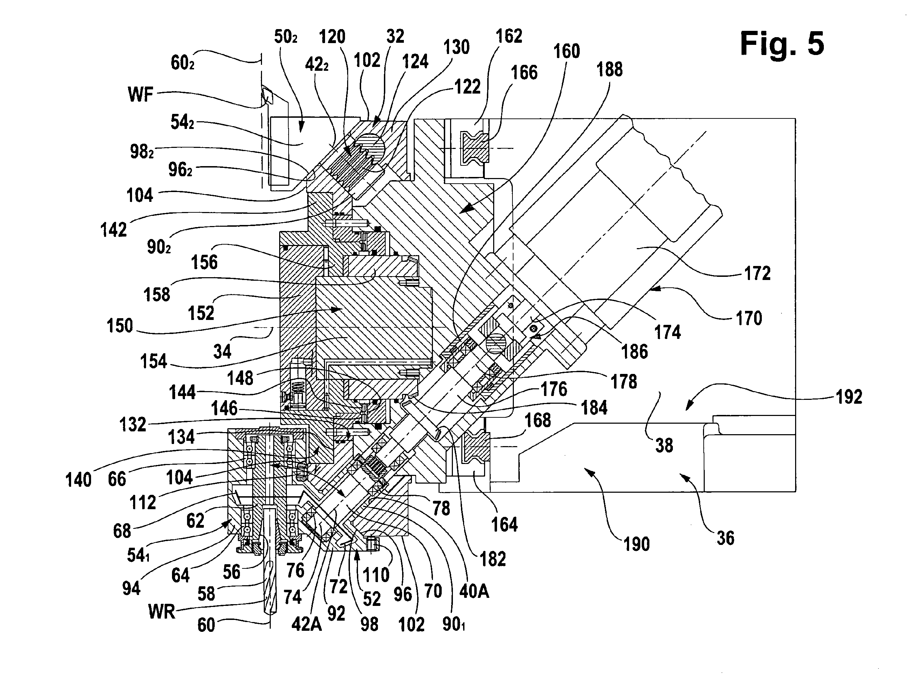

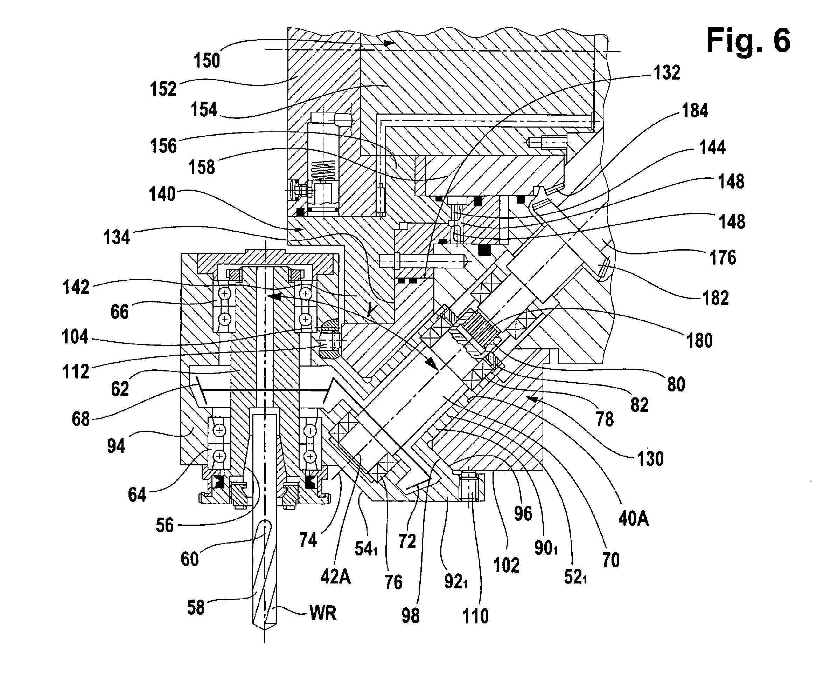

Beim in Figur 5 und Figur 6 dargestellten Ausführungsbeispiel des erfindungsgemäßen Werkzeughalters 50 ist in dem Werkzeughalterkörper 54 eine die Werkzeugaufnahme 56 tragende Werkzeugspindel 62 um die Achse 60 drehbar gelagert, wobei zur Lagerung der Werkzeugspindel 62 zwei in Abstand voneinander angeordnete Lagereinheiten 64 und 66 vorgesehen sind.

Ferner trägt die Werkzeugspindel 62 ein zwischen den Lagereinheiten 64 und 66 sitzendes Kegelrad 68, welches durch ein Kegelrad 72 antreibbar ist, das auf einer Antriebswelle 70 sitzt, deren Achse 74 in einem Winkel γ von ungefähr 45° zur Spindelachse 60 verläuft.

Die Antriebswelle 70 ist dabei durch zwei Lagereinheiten 76 und 78 drehbar gelagert und trägt ein Kupplungselement 80, welches über ein in der Werkzeughalteraufnahme 40 A sitzendes Ende 82 des Verbindungskörpers 52 übersteht.

Vorzugsweise ist dabei, wie in Figur 6 vergrößert dargestellt, der Verbindungskörper 52₁ so ausgebildet, dass dieser einen vorzugsweise zur geometrischen Achse 42A koaxialen Schaft 90₁ aufweist, welchen die Antriebswelle 70 durchsetzt, sowie einen auf dem Schaft 90₁ auf einer dem Ende 82 gegenüberliegenden Seite sitzenden Auflagekörper 92₁, welcher Teil des Werkzeughalterkörpers 54₁ ist und ein ebenfalls Teil des Werkzeughalterkörpers 54₁ bildendes Spindelgehäuse 94 trägt.

Die Lagereinheiten 76 und 78 sitzen dabei im Verbindungskörper 52 und in dem Auflagekörper 92, während die Lagereinheiten 64 und 66 in dem Spindelgehäuse 94 sitzen.

Der Auflagekörper 92 umfasst dabei eine Auflagefläche 96, welche senkrecht zur geometrischen Achse 42 verläuft und auf einer Stützfläche 98 des Revolverkopfes 32 auflegbar ist, welche vorzugsweise die Werkzeughalteraufnahme 40 umschließend am Revolverkopf 32 angeordnet ist.

Dabei erstreckt sich die Stützfläche 98 senkrecht zur geometrischen Achse 42.

Darüber hinaus sind an dem Revolverkopf 32 noch Ausrichtflächen 102 und 104 vorgesehen, welche beispielsweise auf gegenüberliegenden Seiten der geometrischen Achse 42 an die Stützfläche 98 anschließend angeordnet sind.

Dabei ist beispielsweise die Ausrichtfläche 102 Teil einer Umfangsfläche 106 des Revolverkopfes 32, während die Ausrichtfläche 104 Teil einer Stirnfläche 108 des Revolverkopfes 32 ist.

Ferner ist zur Einstellung der genauen Position des Werkzeughalterkörpers 54₁ relativ zum Revolverkopf 32 der Werkzeughalterkörper 54 mit Stellschrauben 110 und 112 versehen, die auf den Ausrichtflächen 102 bzw. 104 abstützbar und gegen diese zustellbar sind und somit die Möglichkeit eröffnen, die Abstützung des Werkzeughalterkörper 54 relativ zu den Ausrichtflächen 102 und 104 einzustellen.

Ein derartiger, sich auf den Ausrichtflächen 102 und 104 abstützender Werkzeughalterkörper 54 ist dabei in zwei gegeneinander um 180° um die geometrische Achse 42 verdrehten Drehstellungen einsetzbar, wie dies in den Figuren 1 bis 4 dargestellt ist.

Alternativ dazu ist es denkbar, wie beispielsweise in Figur 5 anhand des Werkzeughalters 50₂ dargestellt, den Werkzeughalterkörper 54₂ so auszubilden, dass dieser lediglich mit seiner Anlagefläche 96₂ auf der Stützfläche 98 aufsetzbar ist, ohne die zusätzliche Abstützung an den Ausrichtflächen 102 und 104 einzusetzen.

Ein derartiger speziell ausgebildeter Werkzeughalter 50₂ lässt sich dabei bezogen auf die geometrische Achse 42 in beliebigen Drehstellungen in den Revolverkopf 32 und die Werkzeughalteraufnahme40 einsetzen, so dass beliebige Drehstellungen des Werkzeugs WF und auch der Werkzeugachse 60₂ bezüglich der geometrischen Achse 42 möglich sind.

Um ein den Schaft 90₂ für den Werkzeughalterkörper 54₂ in allen Drehstellungen bezüglich der geometrischen Achse 42 fixieren zu können, ist der Schaft mit einer Vielzahl von in Richtung der geometrischen Achse 42 aufeinander folgend angeordneten um die geometrische Achse 42 umlaufenden und eine umlaufende Verzahnung 120 bildenden Zahnringen 122 versehen, welche es erlauben, den Schaft 90₂ in beliebigen Drehstellungen zur geometrischen Achse 42₂ durch ein einziges Spannelement 124, welches im Revolverkopf 32 gelagert ist, zu fixieren, wobei das Spannelement 124 den Schaft 90₂ in die Werkzeughalteraufnahme 40 hineinziehend beaufschlagt und somit die Auflagefläche 96₂ kraftbeaufschlagt gegen die Stützfläche 98₂ des Revolverkopfes 32 anlegt.

Wie insbesondere in Figur 5 und Figur 6 dargestellt, ist der Revolverkopf 32 gebildet durch einen, einen die Werkzeughalteraufnahmen 40 aufweisenden Ringkörper 130, welcher ringförmig um Revolverachse 34 umlaufend ausgebildet ist und einen zentralen Durchbruch 132 aufweist, an welchen außerdem eine ringsumlaufende Stufe 134 eingeformt ist.

In diese Stufe 134 greift ein Lagerkörper 140 ein, welcher drehfest mit dem Ringkörper 130 verbunden ist.

Der Lagerkörper 140 umfasst dabei einen Flanschring 142, welcher in die vorzugsweise um die Revolverachse 34 umlaufende Stufe 134 des Lagerkörpers 140 eingreift, so dass über diesen Lagerkörper 140 nicht nur eine Drehung des Revolverkopfes 32 um die Revolverachse 34, sondern auch eine drehfeste Festlegung des Revolverkopfes 32 möglich ist, die dadurch realisierbar ist, dass der Lagerkörper 140 einen Zahnkranz 144 trägt, welcher unmittelbar an einen Zahnkranz 146 anschließt, der in gleicher Richtung ausgerichtete Zähne aufweist, wie der Zahnkranz 144, so dass in die beiden Zahnkränze 144 und 146 gleichzeitig ein Zahnkranz 148 mit seinen Zähnen einrückbar ist, wobei die Zahnkränze 144, 146 und 148 eine allgemein bekannte 3-teilige Hirth-Verzahnung bilden.

Der drehfest mit dem Revolverkopf 32 verbundene Lagerkörper 140 ist dabei insgesamt an einem Nabenkörper 150 um die Revolverachse 34 drehbar gelagert, wobei der Nabenkörper 150 einen den Lagerkörper 140 abstützenden Deckelkörper 152 aufweist, und außerdem einen Innenkörper 154, der den Deckelkörper 152 trägt und außerdem ebenfalls noch zur drehbaren Lagerung des Lagerkörpers 140 im Bereich eines inneren Flanschrings 156 desselben und eines Antriebsrings 158 beiträgt.

Der Nabenkörper 150 sitzt seinerseits an einem Revolverkopfträger 160 der Trägereinheit 36, der gleichzeitig als Y-Schlitten ausgebildet ist und mit auf einer dem Revolverkopf 32 abgewandten Seite angeordneten Führungswagen 162 und 164 an Y-Führungen 166 und 168 geführt sind, die an der Basis 38 gehalten sind und sich außerdem in einer Y-Richtung erstrecken, die quer zu einer Parallelen zur Spindelachse 16 und senkrecht zu einer X-Richtung verläuft, welche durch eine Bewegungsrichtung des X-Schlittens 24 vorgegeben ist.

An dem Revolverkopfträger 160 ist auch noch eine als Ganzes mit 170 bezeichnete Antriebseinheit gehalten, welche einen Antriebsmotor 172 aufweist, mit welchem eine koaxial zu einer Abtriebswelle 174 des Antriebsmotors 172 angeordnete Drehübertragungswelle 176 antreibbar ist.

Die Drehübertragungswelle 176 trägt endseitig ein Gegenelement 180 zum Kupplungselement 80, so dass die Drehübertragungswelle 176 drehfest mit der koaxial zu deren Drehachse 178 mit ihrer Drehachse 74 angeordneten Antriebswelle 70 koppelbar ist, wobei die Drehachsen 74, 178 koaxial zur geometrischen Achse 42 angeordnet sind.

Darüber hinaus trägt die Drehübertragungswelle 176 noch ein Kegelrad 182, mit welchem eine Kegelverzahnung 184 antreibbar ist, die an dem mit dem inneren Flanschring 156 verbundenen Antriebsring 158 vorgesehen ist, wobei dieser damit sowohl drehfest mit dem Lagerkörper 140 als auch mit dem Ringkörper 130 gekoppelt ist.

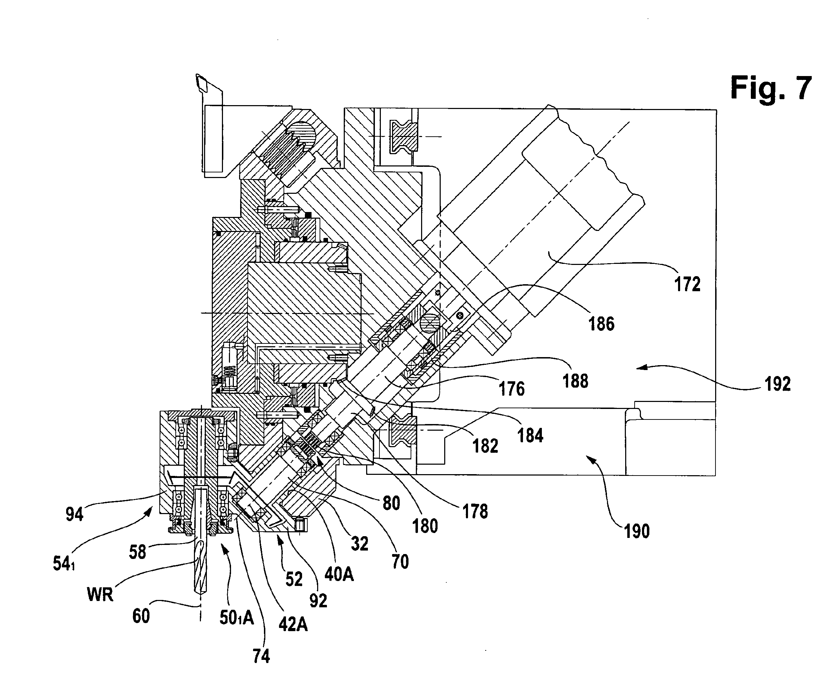

Das Kegelrad 182 und das Gegenelement 180 sind dabei so an der Drehübertragungswelle 176 angeordnet, dass entweder wie in Figur 5 und 6 dargestellt, das Gegenelement 180 mit dem Kupplungselement 80 in Eingriff ist, während das Kegelrad 182 außer Eingriff mit der Kegelverzahnung 184 steht, oder umgekehrt das Kegelrad 182 mit der Kegelverzahnung 184 in Eingriff steht, während das Gegenelement 180 und das Kupplungselement 80 außer Eingriff sind, wie in Figur 7 dargestellt.

Hierzu ist die Drehübertragungswelle 176 in Richtung ihrer Drehachse 178, die mit der geometrischen Achse 42 zusammenfällt, hin und her verschiebbar, so dass mit dem Antriebsmotor 172 entweder der Revolverkopf 32 um die Revolverachse 34 drehbar ist oder alternativ dazu das in der Arbeitsstellung stehende Werkzeug, beispielsweise das Werkzeug WR, rotierend antreibbar ist, je nach Stellung der Drehübertragungswelle 176.

Hierzu ist die Drehübertragungswelle 176 über eine axial verstellbare Kupplung 186 mit der Abtriebswelle 174 des Antriebsmotors 172 ständig drehfest gekoppelt und durch einen hydraulischen Verschiebeantrieb 188 in Richtung ihrer Drehachse 178 verschiebbar.

Bei der erfindungsgemäßen Lösung ist die gesamte Werkzeugantriebseinheit 170 dadurch, dass sie am Revolverkopfträger 160 gehalten ist, mit dem Revolverkopfträger in Y-Richtung zur Basis 38 der Trägereinheit 36 verfahrbar, wobei hierzu innerhalb eines Gehäuses 190 der Trägereinheit 36 ein entsprechender Bewegungsfreiraum 192 für die Werkzeugantriebseinheit 170 zur Verfügung gestellt werden muss.

Insbesondere ist bei der erfindungsgemäßen Lösung die Werkzeugantriebseinheit 170 ausschließlich den in der Arbeitsstellung stehenden Werkzeughalter 54₁ zugeordnet, während alle übrigen Werkzeughalter 54₁, die rotierend antreibbar sein können, nicht angetrieben werden, sondern in einem nicht angetriebenen Zustand verbleiben, solange sie außerhalb der Arbeitsstellung A stehen, denn nur der in der Arbeitsstellung A stehende Werkzeughalter 54₁A kann durch die beschriebene Bewegung der Drehübertragungswelle 176 mit dem Antriebsmotor 172 angetrieben werden.

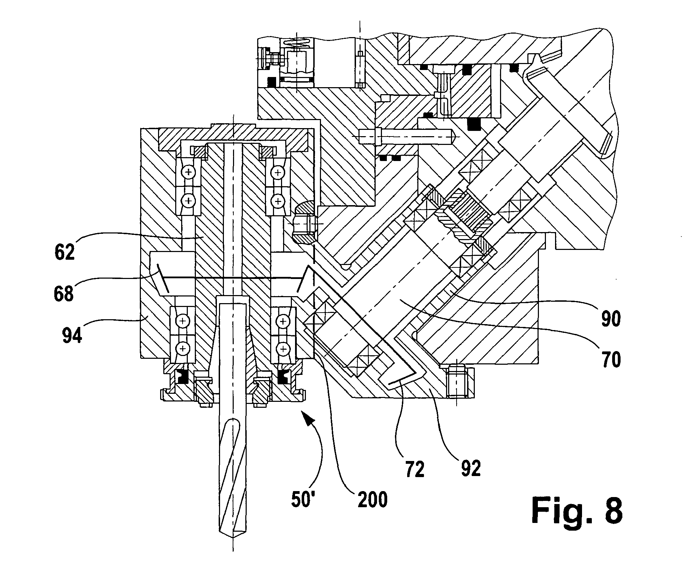

Bei einem zweiten Ausführungsbeispiel eines erfindungsgemäßen Werkzeughalters 50', dargestellt in Figur 8, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum in den Figuren 5 bis 7 dargestellten Ausführungsbeispiel des Werkzeughalters 50 ist bei dem zweiten Ausführungsbeispiel desselben das Spindelgehäuse 94 vom Auflagekörper 92 mit dem Schaft 90 längs einer Trennlinie 200 trennbar, so dass identischen Auflagekörpern 92 mit Schaft 90 unterschiedliche Spindelgehäuse 94 zugeordnet werden können.

Beispielsweise können dabei die Spindelgehäuse 94 jeweils unterschiedliche Werkstückspindeln 62 mit unterschiedlichen Werkzeugaufnahmen 56 aufweisen.

Ergänzend oder alternativ dazu ist es auch denkbar, die Kegelräder 68 und 72 auswechselbar zu gestalten, so dass ein Übersetzungsverhältnis zwischen der Antriebswelle 70 und der Werkzeugspindel 62 einstellbar ist.

Im Übrigen ist der Werkzeughalter 50' gemäß dem zweiten Ausführungsbeispiel in gleicher Weise ausgebildet wie beim ersten Ausführungsbeispiel, so dass auf die Ausführungen zum ersten Ausführungsbeispiel vollinhaltlich Bezug genommen werden kann.

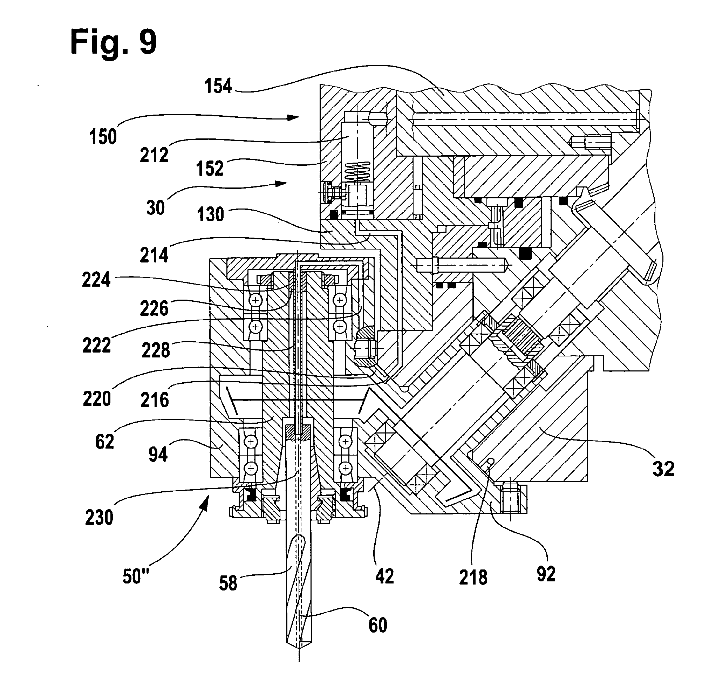

Bei einem dritten Ausführungsbeispiel einer erfindungsgemäßen Werkzeugmaschine, dargestellt in Figur 9, sind diejenigen Elemente, die mit denen der voranstehenden Ausführungsbeispiele identisch sind, mit denselben Bezugszeichen versehen, so dass hinsichtlich der Beschreibung derselben vollinhaltlich auf die voranstehenden Ausführungsbeispiele Bezug genommen werden kann.

Im Gegensatz zu den voranstehenden Ausführungsbeispielen ist der Werkzeughalter 50" gemäß dem dritten Ausführungsbeispiel mit Kühlschmierstoff versorgbar, wozu in dem Innenkörper 154 und dem Deckelkörper 152 des Nabenkörpers 150 ein Zufuhrkanalsystem 212 für Kühlschmierstoff versehen ist, das nicht mit dem Revolverkopf 32 mitdrehbar ausgebildet ist, sondern stationär relativ zum Revolverkopfträger 160 angeordnet ist.

Das stationäre Kanalsystem 212 findet seine Fortsetzung in einem Zuleitungskanal 214, welcher ausgehend von dem Kanalsystem 212 den Ringkörper 130 durchsetzt und von diesem in den mit dem Ringkörper 130 feste verbundenen Revolverkopf 32 übergeht, wobei der Revolverkopf 32 zwei zur geometrischen Achse 42 symmetrisch angeordnete Mündungsöffnungen 216 und 218 aufweist, wovon eine mit einem Kanalsystem 220 verbindbar ist, das innerhalb des Auflagekörpers 92 verläuft und dann in ein Kanalsystem 222 im Spindelgehäuse 94 übergeht, wobei das Kanalsystem 222 mit einem Zufuhrstutzen 224 verbunden ist, der koaxial zur Werkzeugspindel 62 angeordnet ist und in ein hinteres Ende derselben 226 eingreift, um den Kühlschmierstoff einem Zentralkanal 228 der Werkzeugspindel 62 zuzuführen, von welchem dann ausgehend der Schmierstoff in einen Kühlschmierstoffkanal 230 im rotierend angetriebenen Werkzeug 58 übertreten kann.

Somit besteht in einfacher Weise die Möglichkeit, Kühlschmierstoff unmittelbar dem rotierend angetriebenen Werkzeug 58 zuzuführen, ohne dass Kühlschmierstoff in die Antriebseinheit 170 eindringen kann.

Durch die beiden Mündungsöffnungen 216 und 218 besteht ferner die Möglichkeit, in beiden Drehstellungen Kühlschmierstoff dem Werkzeughalter 50" zuzuführen.

## Patentansprüche

1. Werkzeugmaschine umfassend eine Werkstückaufnahme (18), mit welcher ein in dieser aufgenommenes Werkstück (20) um eine Werkstückachse (16) drehbar ist, einen Werkzeugträger (30) mit einer Werkzeughalteraufnahme (40), einen ein Werkzeug (58) tragenden Werkzeughalter (50) mit einem Werkzeughalterkörper (54) und einem Verbindungskörper (52), der formschlüssig mit der Werkzeughalteraufnahme (40) verbindbar ist, und mindestens zwei gesteuerte Bearbeitungsachsen (X, Z), mit welchen die Werkstückaufnahme (18) und der Werkzeugträger (30) relativ zueinander bewegbar sind,
**dadurch gekennzeichnet, dass** die Werkzeughalteraufnahme (40) und der Werkzeughalterkörper (54) in mindestens zwei bezüglich einer geometrischen Achse (42) gegeneinander verdrehten Drehstellungen zueinander ausrichtbar sind, dass in einer Arbeitsstellung (A) des Werkzeughalters (50) die geometrische Achse (42) in einem Winkel von ungefähr 45° gegenüber der Werkstückdrehachse (16) geneigt ausgerichtet ist und dass eine Werkzeugachse (60) einen Winkel von ungefähr 45° mit der geometrischen Achse (42) einschließt.

2. Werkzeugmaschine nach Anspruch 1, **dadurch gekennzeichnet, dass** der Werkzeughalterkörper (54) relativ zur Werkzeughalteraufnahme (40) in mindestens zwei um 180° relativ zueinander gedrehten Drehstellungen positionierbar ist.

3. Werkzeugmaschine nach Anspruch 1 oder 2, **dadurch gekennzeichnet, dass** der Verbindungskörper (52) in mindestens zwei gegeneinander verdrehten Drehstellungen in die Werkzeughalteraufnahme (40) einsetzbar ist.

4. Werkzeugmaschine nach einem der voranstehenden Ansprüche, **dadurch gekennzeichnet, dass** der Werkzeugträger (30) eine Stützfläche (98) aufweist, auf welcher der Werkzeughalter (50) mit einer Anlagefläche (96) abstützbar ist.

5. Werkzeugmaschine nach Anspruch 4, **dadurch gekennzeichnet, dass** jeder Werkzeughalteraufnahme (40) eine Stützfläche (98) zugeordnet ist.

6. Werkzeugmaschine nach Anspruch 4 oder 5, **dadurch gekennzeichnet, dass** die Stützfläche (98) senkrecht zur geometrischen Achse (42) verläuft.

7. Werkzeugmaschine nach einem der Ansprüche 4 bis 6, **dadurch gekennzeichnet, dass** die Stützfläche (98) zumindest bereichsweise um die Werkzeughalteraufnahme (40) herum angeordnet ist.

8. Werkzeugmaschine nach Anspruch 7, **dadurch gekennzeichnet, dass** die Stützfläche (98) die Werkzeughalteraufnahme (40) umschließt.

9. Werkzeugmaschine nach einem der Ansprüche 4 bis 8, **dadurch gekennzeichnet, dass** die Stützfläche (98) eine stellungsunabhängige Stützfläche (98) ist.

10. Werkzeugmaschine nach einem der voranstehenden Ansprüche, **dadurch gekennzeichnet, dass** der Werkzeughalteraufnahme (40) mindestens eine stellungsabhängige Stützfläche (102, 104) zugeordnet ist.

11. Werkzeugmaschine nach Anspruch 10, **dadurch gekennzeichnet, dass** die stellungsabhängige Stützfläche (102, 104) relativ zur stellungsunabhängigen Stützfläche (98) in einem spitzen Winkel verläuft.

12. Werkzeugmaschine nach Anspruch 11, **dadurch gekennzeichnet, dass** der spitze Winkel ungefähr 45° beträgt.

13. Werkzeugmaschine nach einem der Ansprüche 10 bis 12, **dadurch gekennzeichnet, dass** die stellungsabhängige Stützfläche (102, 104) im Anschluss an die stellungsunabhängige Stützfläche (98) angeordnet ist.

14. Werkzeugmaschine nach einem der Ansprüche 10 bis 13, **dadurch gekennzeichnet, dass** mehrere stellungsabhängige Stützflächen (102, 104) vorgesehen sind.

15. Werkzeugmaschine nach Anspruch 14, **dadurch gekennzeichnet, dass** die stellungsabhängigen Stützflächen (102, 104) auf mehreren Seiten der der stellungsunabhängigen Stützfläche (98) angeordnet sind.

16. Werkzeugmaschine nach Anspruch 14 oder 15, **dadurch gekennzeichnet, dass** jeder möglichen Drehstellung des Werkzeughalterkörpers (54) mindestens eine stellungsabhängige Stützfläche (102, 104) zugeordnet ist.

17. Werkzeugmaschine nach einem der voranstehenden Ansprüche, **dadurch gekennzeichnet, dass** über den Verbindungskörper (52) ein Antrieb des Werkzeugs (58) erfolgt.

18. Werkzeugmaschine nach Anspruch 17, **dadurch gekennzeichnet, dass** in den Werkzeughalter (50) eine Werkzeugspindel (62) für ein angetriebenes Werkzeug (58) integriert ist.

19. Werkzeugmaschine nach Anspruch 18, **dadurch gekennzeichnet, dass** die Werkzeugspindel (62) durch eine in dem Verbindungskörper (52) vorgesehene Antriebswelle (70) antreibbar ist.

20. Werkzeugmaschine nach Anspruch 19, **dadurch gekennzeichnet, dass** die Antriebswelle (70) koaxial zur geometrischen Achse (42) angeordnet ist.

21. Werkzeugmaschine nach Anspruch 19 oder 20, **dadurch gekennzeichnet, dass** die Antriebswelle (70) ein Kupplungselement (80) trägt.

22. Werkzeugmaschine nach Anspruch 21, **dadurch gekennzeichnet, dass** das Kupplungselement (80) endseitig an einem in die Werkzeughalteraufnahme (40) einführbaren vorderen Ende (82) des Verbindungskörpers (52) angeordnet ist.

23. Werkzeugmaschine nach Anspruch 21 oder 22, **dadurch gekennzeichnet, dass** das Kupplungselement (80) mit einer Werkzeugantriebseinheit (170) kuppelbar ist.

24. Werkzeugmaschine nach Anspruch 23, **dadurch gekennzeichnet, dass** die Werkzeugantriebseinheit (170) dem Kupplungselement (80) des in einer Arbeitsstellung (A) stehenden Werkzeughalters (50₁) verbindbar ist.

25. Werkzeugmaschine nach Anspruch 24, **dadurch gekennzeichnet, dass** die Werkzeugantriebseinheit (170) stationär angeordnet ist.

26. Werkzeugmaschine nach einem der voranstehenden Ansprüche, **dadurch gekennzeichnet, dass** die Werkzeughalteraufnahme (40) eine in den Werkzeugträger (30) eindringende Bohrung ist, deren Mittelachse die geometrische Achse (42) darstellt.

27. Werkzeugmaschine nach Anspruch 26, **dadurch gekennzeichnet, dass** die Bohrung (40) als Zylinderbohrung ausgeführt ist.

28. Werkzeugmaschine nach einem der voranstehenden Ansprüche, **dadurch gekennzeichnet, dass** der Verbindungskörper (52) ein in die Werkzeughalteraufnahme (40) einsetzbarer Schaft (90) ist.

29. Werkzeugmaschine nach Anspruch 28, **dadurch gekennzeichnet, dass** der Schaft (90) mindestens eine Verzahnung (120) aufweist.

30. Werkzeugmaschine nach Anspruch 29, **dadurch gekennzeichnet, dass** der Schaft (90) eine Ringverzahnung (122) aufweist.

31. Werkzeugmaschine nach einem der voranstehenden Ansprüche, **dadurch gekennzeichnet, dass** der Werkzeugträger (30) eine Kühlschmierstoffversorgung für das Werkzeug (58) aufweist.

32. Werkzeugmaschine nach Anspruch 31, **dadurch gekennzeichnet, dass** die Kühlschmierstoffversorgung des Werkzeughalters (50) über mindestens eine Mündungsöffnung (216, 218) in der Stützfläche (98) erfolgt.

33. Werkzeugmaschine nach Anspruch 31 oder 32, **dadurch gekennzeichnet, dass** die Kühlschmierstoffversorgung über im Werkzeugträger (30) und im Werkzeughalterkörper (54) vorgesehene Kanäle (214, 220, 222) erfolgt.

34. Werkzeugmaschine nach einem der Ansprüche 31 bis 32, **dadurch gekennzeichnet, dass** die Kühlschmierstoffversorgung des Werkzeugs (58) über einen in der Werkzeugspindel (62) verlaufenden Kanal (228) erfolgt.

35. Werkzeugmaschine nach einem der voranstehenden Ansprüche, **dadurch gekennzeichnet, dass** der Werkzeughalterkörper (54) einen Anlagekörper (92) und ein Spindelgehäuse (94) umfasst.

36. Werkzeugmaschine nach Anspruch 35, **dadurch gekennzeichnet, dass** der Anlagekörper (92) und das Spindelgehäuse (94) voneinander trennbar sind.

37. Werkzeugmaschine nach einem der voranstehenden Ansprüche, **dadurch gekennzeichnet, dass** der Werkzeugträger ein Werkzeugrevolver (30) mit einem Revolverträger (160) und einem Revolverkopf (32) ist, welcher die Werkzeughalteraufnahmen (40) trägt.

38. Werkzeugmaschine nach Anspruch 37, **dadurch gekennzeichnet, dass** der Revolverkopf (32) um eine Revolverachse (34) drehbar ist und dass die geometrische Achse (42) in einem Winkel von ungefähr 45° gegenüber der Revolverachse (34) geneigt angeordnet ist.

39. Werkzeugmaschine nach einem der voranstehenden Ansprüche, **dadurch gekennzeichnet, dass** der Revolverkopf (32) mittels der Werkzeugantriebseinheit (170) um die Revolverachse (34) drehbar ist.

40. Werkzeugmaschine nach einem der voranstehenden Ansprüche, **dadurch gekennzeichnet, dass** die Werkstückaufnahme eine Werkstückspindel (14) ist.

41. Werkzeugmaschine nach Anspruch 40, **dadurch gekennzeichnet, dass** die Drehachse des Werkstücks (20) eine Spindelachse (16) ist.

42. Werkzeugmaschine nach einem der voranstehenden Ansprüche, **dadurch gekennzeichnet, dass** der Werkzeugträger (30) auf einem Werkzeugschlitten (24) sitzt.

43. Werkzeughalter (50) mit einem längs einer Werkzeugachse (60) ausgerichteten Werkzeug (58), mit einem Werkzeughalterkörper (54) und einem Verbindungskörper (52), der formschlüssig mit einer Werkzeughalteraufnahme (40) verbindbar ist, **dadurch gekennzeichnet, dass** der Verbindungskörper (52) längs einer geometrischen Achse (42) in die Werkzeughalteraufnahme (40) einsetzbar ist, die einen Winkel von ungefähr 45° mit der Werkzeugachse (60) einschließt.

44. Werkzeughalter nach Anspruch 43, **dadurch gekennzeichnet, dass** der Verbindungskörper (52) in mindestens zwei gegeneinander verdrehten Drehstellungen in die Werkzeugaufnahme (40) einsetzbar ist.

45. Werkzeughalter nach Anspruch 43 oder 44, **dadurch gekennzeichnet, dass** der Werkzeughalter (50) mit einer Anlagefläche (96) auf einer Stützfläche (98) des Werkzeugträgers (30) abstützbar ist.

46. Werkzeughalter nach einem der Ansprüche 43 bis 45, **dadurch gekennzeichnet, dass** über den Verbindungskörper (52) ein Antrieb des Werkzeugs (58) möglich ist.

47. Werkzeughalter nach Anspruch 46, **dadurch gekennzeichnet, dass** in den Werkzeughalter (50) eine Werkzeugspindel (62) für ein angetriebenes Werkzeug (58) integriert ist.

48. Werkzeughalter nach Anspruch 47, **dadurch gekennzeichnet, dass** die Werkzeugspindel (62) durch eine in dem Verbindungskörper (52) vorgesehene Antriebswelle (70) antreibbar ist.

49. Werkzeughalter nach Anspruch 48, **dadurch gekennzeichnet, dass** die Antriebswelle (70) koaxial zur geometrischen Achse (42) angeordnet ist.

50. Werkzeughalter nach Anspruch 48 oder 49, **dadurch gekennzeichnet, dass** die Antriebswelle (70) ein Kupplungselement (80) trägt.

51. Werkzeughalter nach Anspruch 50, **dadurch gekennzeichnet, dass** das Kupplungselement (80) endseitig an einem in die Werkzeughalteraufnahme (40) einführbaren vorderen Ende (82) des Verbindungskörpers (52) angeordnet ist.

52. Werkzeughalter nach einem der Ansprüche 43 bis 51, **dadurch gekennzeichnet, dass** der Verbindungskörper (52) ein in die Werkzeughalteraufnahme (40) einsetzbarer Schaft (90) ist.

53. Werkzeughalter nach Anspruch 52, **dadurch gekennzeichnet, dass** der Schaft (90) mindestens eine Verzahnung (120) aufweist.

54. Werkzeughalter nach Anspruch 53, **dadurch gekennzeichnet, dass** der Schaft (90) eine Ringverzahnung (122) aufweist.

55. Werkzeughalter nach einem der voranstehenden Ansprüche, **dadurch gekennzeichnet, dass** der Werkzeughalterkörper (54) einen Anlagekörper (92) und ein Spindelgehäuse (94) umfasst.

56. Werkzeughalter nach Anspruch 55, **dadurch gekennzeichnet, dass** der Anlagekörper (92) und das Spindelgehäuse (94) voneinander trennbar sind.
